Europäisches Patentamt

European Patent Office

Office européen des brevets

(11) Veröffentlichungsnummer: **0 282 917 B1**

(12) **EUROPÄISCHE PATENTSCHRIFT**

(45) Veröffentlichungstag der Patentschrift: **10.08.94**

(21) Anmeldenummer: **88103854.1**

(22) Anmeldetag: **11.03.88**

(51) Int. Cl.⁵: **B32B 27/32**, B32B 27/20

(54) **Metallisierbare Mehrschichtfolie, ihre Herstellung und ihre Verwendung.**

(30) Priorität: **20.03.87 DE 3709252**

(43) Veröffentlichungstag der Anmeldung:
**21.09.88 Patentblatt 88/38**

(45) Bekanntmachung des Hinweises auf die
Patenterteilung:
**10.08.94 Patentblatt 94/32**

(84) Benannte Vertragsstaaten:
**BE DE ES FR GB IT NL**

(56) Entgegenhaltungen:
**EP-A- 0 216 343**
**EP-A- 0 222 296**
**EP-A- 0 263 963**
**US-A- 4 604 322**

(73) Patentinhaber: **Wilhelm, Thomas, Dr.**
**Justinus-Kerner-Strasse 18**
**D-75056 Sulzfeld(DE)**

(72) Erfinder: **Bothe, Lothar, Dr.**
**Kurt-Schumacher-Strasse 69E**
**D-6500 Mainz-Gonsenheim(DE)**
Erfinder: **Schlögl, Gunter Dr.**
**Finkenweg 2**
**D-6233 Kelkheim(DE)**
Erfinder: **Crass, Günther**
**Bachstrasse 7**
**D-6204 Taunusstein 4(DE)**
Erfinder: **Wilhelm, Thomas, Dr.**
**Justinus-Kerner-Str.18**
**D-7519 Sulzfeld(DE)**

**Beschreibung**

Die Erfindung betrifft eine metallisierbare, siegelfähige, biaxial streckorientierte Mehrschichtfolie umfassend eine Basisschicht im wesentlichen aus Polypropylen, eine erste polyolefinische Deckschicht und eine zweite polyolefinische Deckschicht, wobei alle Schichten Neutralisationsmittel und einen Stabilisator gegen thermischen Abbau enthalten.

Verbundfolien bzw. Laminate, die metallisiert werden können, sind bereits im Stand der Technik bekannt.

So wird z.B. in der EP-A-122 495 ein Folienlaminat einer Oberflächenrauhigkeit $R_a$ von 0,2 bis 1,5 $\mu$m offenbart, bestehend aus einem orientierten Polypropylenfilm und einer darauf laminierten Schicht, die aus einem Ethylen-Propylen-Copolymerisat aufgebaut ist, wobei diese zu 10 bis 50 Gew.-% die Ethylenkomponente enthält. Auf beiden Schichten kann eine Metallschicht auflaminiert sein. Das Laminat soll eine ausgezeichnete Haftfestigkeit zu Metallschichten zeigen, jedenfalls im Vergleich zu Papierschichten, und guten Glanz und Transparenz aufweisen. Allgemein kann jede der beiden Schichten übliche Additive enthalten wie Hitzestabilisatoren, Antioxidantien, Antistatika, Füllstoffe und Aufheller.

In der EP-A-21 672 ferner wird ein durch Coextrusion hergestelltes Laminat beschrieben, bestehend aus einer Innenschicht aus einem Propylenhomopolymeren und mindestens einer Außenschicht eines Ethylen-Propylen-Copolymeren, das keine Gleitmittelzusätze enthält. Das Laminat wird coronabehandelt, damit eine auf die Außenschicht(en) aufgebrachte Metallschicht besser haftet. Sofern eine Außenschicht nicht metallisiert wird, ist diese siegelfähig. Das Laminat kann aber aufgrund des Fehlens von Gleitmitteln in mindestens einer der äußeren, nicht metallisierten Schichten keine gute Maschinengängigkeit zeigen und wird auch aufgrund der Zusammensetzung der Außenschichten keine gleichbleibende die Adhäsion der Metallschicht fördernde Wirkung der Coronabehandlung aufweisen.

Wie die Diskussion des Standes der Technik zeigt, wurde bisher in keinem Dokument eine Optimierung hinsichtlich der Siegeleigenschaften, der Metallhaftung oder auch des Metallglanzes der auf das jeweilige Laminat aufgetragenen Metallschicht angestrebt.

Die Aufgabe der Erfindung besteht demnach darin, eine metallisierbare Polypropylenfolie zu schaffen, deren Anforderungsprofil im Hinblick auf die Merkmalskombination:

a) gute Verarbeitungseigenschaften beim Wickeln, Schneiden, Metallisieren, Bedrucken oder Extrusionsbeschichten bzw. Laminieren sowie der Maschinengängigkeit in Verpackungsmaschinen,

b) sehr gute und konstant bleibende Metallhaftung,

c) ein optisch gutes Erscheinungsbild der Folie, insbesondere ein hoher Glanz der Metallschicht bzw. der metallisierten Oberfläche und

d) gute Siegeleigenschaften

optimiert ist.

Der Gegenstand der Erfindung ist durch die Patentansprüche gekennzeichnet.

Als bevorzugtes Polypropylen für die Basisschicht wird im Rahmen der vorliegenden Erfindung ein isotaktisches Propylenhomopolymeres eingesetzt oder ein Copolymeres, das zum überwiegenden Anteil aus Propyleneinheiten zusammengesetzt ist. Solche Polymeren besitzen üblicherweise einen Schmelzpunkt von mehr als 150°C. Isotaktisches Polypropylen mit einem n-heptanlöslichen Anteil von weniger als 15 Gew.-%, Copolymere von Ethylen und Propylen mit einem Ethylengehalt von weniger als 2 Gew.-% und Copolymere von Propylen mit anderen Alpha-Olefinen mit 4 bis 8 Kohlenstoffatomen und mit einem Gehalt dieser Alpha-Olefine von weniger als 6 Gew.-% stellen typische Beispiele für das bevorzugte thermoplastische Polypropylen der Basisschicht dar.

Die bevorzugten thermoplastischen Polymeren haben zweckmäßigerweise einen Schmelzflußindex im Bereich von 0,5 g/10 min bis 8 g/10 min bei 230°C und 2,16 kp Belastung (DIN 53 735), insbesondere von 1,5 g/10 min bis 4 g/10 min.

Die Deckschicht der zu metallisierenden vorzugsweise oberflächenbehandelten Seite kann bestehen aus einem isotaktischen Polypropylen mit einem n-heptanlöslichen Anteil von 15 Gew.-% oder weniger oder einem Copolymeren von Propylen und Ethylen mit einem Ethylengehalt von 3 Gew.-% oder weniger oder einem Copolymeren von Propylen mit Ethylen und/oder Buten-1 mit einem Ethylen- und Butengehalt von insgesamt 5 Gew.-% oder weniger. Der Schmelzpunkt des Polymeren für die Deckschicht liegt vorzugsweise über 145°C.

Isotaktisches Polypropylen ist besonders bevorzugt. Das Propylenpolymere dieser Deckschicht hat im allgemeinen einen Schmelzflußindex von 0,5 g/10 min bis 10 g/10 min, vorzugsweise 1,5 g/10 min bis 4 g/10 min, bei 230°C und 2,16 kg Belastung (DIN 53 735).

Zur weiteren Verbesserung der Eigenschaften enthält diese Oberflächenschicht vorzugsweise ein gesättigtes Kohlenwasserstoffharz mit einer Erweichungstemperatur von 100 bis 160°C, insbesondere von 120 bis 140 °C.

Unter den zahlreichen niedrigmolekularen Harzen sind die hydrierten Kohlenwasserstoffharze bevorzugt, und zwar in Form der Erdölharze (Petroleumharze), Styrolharze, Cyclopentadienharze und Terpenharze (diese Harze sind in Ullmanns Enzyklopädie der Techn. Chemie, 4. Auflage, Band 2, Seiten 539 bis 553, beschrieben).

Als besonders geeignete Kohlenwasserstoffharze haben sich hydrierte Cyclopentadienharze erwiesen.

Die wirksame Menge an gesättigtem Harz beträgt 2 bis 12 Gew.-%, vorzugsweise 6 bis 10 Gew.-%, bezogen auf das Gesamtgewicht dieser Deckschicht.

Die Deckschicht wird vorzugsweise einer Oberflächenbehandlung durch elektrische Coronaentladung unterzogen. Bei der Coronabehandlung wird die Folie mit der nicht für die Oberflächenbehandlung vorgesehenen Oberfläche über eine geerdete Walze geführt, über der, von metallenen elektrischen Elektroden ausgehend, eine Flammencorona gezündet wird. Üblicherweise wird die Coronaentladung bei 10 000 V mit einem Wechselstrom von etwa 10 000 Hz durchgeführt. Die freie Folienoberfläche wird beim Durchlaufen der Entladungszone durch die dort ablaufenden hochenergiereichen chemischen Prozesse polarisiert und daher in gewissem Umfang aufnahmefähig für polare Medien.

Die siegelbare olefinische Deckschicht besteht vorzugsweise im wesentlichen aus einem Propylencopolymeren. Bevorzugt sind Propylen-Ethylen-Copolymere mit vorzugsweise 2 bis 10 Gew.-% Ethylen, Propylen-Butylen-Copolymere mit vorzugsweise 0,5 bis 20 Gew.-% Butylen, Ethylen-Propylen-Butylen-Terpolymere mit vorzugsweise 0,5 bis 7 Gew.-% Ethylen und 5 bis 30 Gew.-% Butylen oder Mischungen aus diesen Polymeren (Gewichtsprozente bezogen auf das Gesamtgewicht des Copolymeren bzw. Terpolymeren). Der Schmelzpunkt des Polymeren für die Siegelschichten liegt im allgemeinen bei 80 bis 160 °C, vorzugsweise 100 bis 140 °C. Der Schmelzflußindex dieses Polymeren liegt vorzugsweise höher als jener des Polymeren der Basisschicht und beträgt im allgemeinen 1 bis 12 g/10 min, vorzugsweise 3 bis 9 g/10 min, bei 230 °C und 2,16 kg Belastung (DIN 53 735).

Die siegelbare olefinische Deckschicht enthält vorzugsweise übliche Antiblockmittel in einer Menge von 0,1 bis 0,7 Gew.-%, insbesondere 0,2 bis 0,5 Gew.-%, bezogen auf das Gewicht der Deckschicht. Es können ferner unverträgliche organische Polymerisate wie Polyamid, Polyester, Polycarbonate und dergleichen oder anorganische Substanzen wie Siliciumdioxid (z.B. [R]Syloid 244) und/oder Silikate, insbesondere Aluminiumsilikat (z.B. [R]ASP 900) zugesetzt werden.

Alle Schichten, die Basisschicht und die beiden Deckschichten, enthalten als Stabilisator einen phenolischen Stabilisator in einer Menge von vorzugsweise 0,05 bis 0,15 Gew.-%, insbesondere 0,1 Gew.-%, bezogen auf die jeweilige Schicht. Besonders bevorzugt ist, daß dessen Gehalt in allen Schichten übereinstimmt. Der Stabilisator soll eine Molmasse von größer als 1000 g/mol aufweisen. Besonders bevorzugt ist Pentaerythrityltetrakis-3-(3,5-di-tert.butyl-4-hydroxyphenyl)-propionat ([R]Irganox 1010). Eine Kombination des phenolischen Stabilisators mit Tris-(2,4-di-tert.butylphenyl)-phosphit kann erfolgen.

Ebenso ist erfindungsgemäß in allen Schichten ein spezielles Calciumcarbonat als Neutralisationsmittel enthalten. Calciumcarbonat wird zwar oft allgemein genannt, wenn es darum geht, negative Einflüsse von Katalysatorrückständen auf die Folie und die Folienverarbeitung, z.B. die Korrosion an den Verarbeitungsmaschinen, auszuschalten, im allgemeinen wird jedoch in diesem Zusammenhang Zusatzstoffen wie Calciumstearat oder Trikaliumcitrat eine größere Bedeutung beigemessen.

Überraschenderweise wurde nun gefunden, daß eine geringe Menge des speziellen Calciumcarbonats, inkorporiert in allen Schichten der erfindungsgemäßen Mehrschichtfolie, zu einer Verminderung der Korrosion an den Verarbeitungsmaschinen führt und, verglichen mit allen bisher bekannten Zusatzstoffen, keine Ablagerungen und Ausdampfungen an den Produktionsmaschinen entstehen, durch die Produktionsunterbrechungen für Reinigungsarbeiten notwendig werden. Durch das Nichtauftreten von Ausdampfungen bzw. Ablagerungen in Querstreckrahmen wird wirksam vermieden, daß durch herabfallende Wachstropfen die Qualität der Folien gefährdet wird. Ebenso bleibt die Farbqualität der Folien bei deren Verarbeitung mit bei der Folienherstellung anfallendem Folienregenerat unverändert erhalten; es tritt bei Einsatz von Regenerat keine Verfärbung der Folie auf.

Jede der Schichten enthält vorzugsweise 0,01 bis 0,2 Gew.-%, insbesondere 0,03 bis 0,1 Gew.-%, bezogen auf die jeweilige Schicht, eines bevorzugt in allen Schichten gleich großen Anteils dieses speziellen Calciumcarbonats, dessen Korngröße so klein wie möglich sein soll. Die Teilchen sind absolut kleiner als 10 µm, vorzugsweise kleiner als 7 µm, d.h. es sollen keine Teilchen vorhanden sein, die größere Durchmesser aufweisen, wobei der mittlere Teilchendurchmesser kleiner als 0,1 µm, vorzugsweise kleiner als 0,05 µm, sein soll. Die spezifische Oberfläche des Calciumcarbonats soll über 40 m²/g, bevorzugt über 80 m²/g, liegen. Der Weißgrad beträgt mehr als 90%, insbesondere mehr als 95%.

Die Dicke der erfindungsgemäßen mehrschichtigen Folie kann innerhalb weiter Grenzen variieren. Die Dicke (Gesamtdicke) der mehrschichtigen Folie beträgt im allgemeinen 10 bis 40 µm, vorzugsweise 20 bis

30 μm. Die Deckschichten sind im allgemeinen etwa 0,2 bis 3 μm dick, vorzugsweise 0,4 bis 1,5 μm, in der besonders bevorzugten Ausführungsform der Erfindung weisen sie gleiche Dicke auf.

Über die siegelfähige Deckschicht ist es möglich, die erfindungsgemäße mehrschichtige Folie mit sich selbst zu einem sechsschichtigen Folienlaminat zu erweitern, das gegebenenfalls eine Metallisierung auf beiden Außenschichten tragen kann. Ebenso ist es möglich, auch einschichtige, zweischichtige oder mehr als dreischichtige Laminate, insbesondere aus Polypropylen, über diese Deckschicht mit der erfindungsgemäßen mehrschichtigen Folie zu verbinden.

Durch die besondere erfindungsgemäße Ausgestaltung der oberflächenbehandelten Deckschicht, insbesondere durch Anwendung des speziellen Calciumcarbonats und auch des hydrierten Kohlenwasserstoffharzes, werden gleichzeitig mehrere sehr wesentliche Faktoren, die sich auf die Folieneigenschaften auswirken, in überraschendem Ausmaß verbessert.

Die Oberfläche zeigt eine verbesserte Kratzfestigkeit, verglichen mit durch Calciumstearat modifizierten Deckschichten. Ebenso zeigt die erfindungsgemäße Oberfläche im besonderen einen herausragenden Oberflächenglanz, der sich dann besonders auswirkt, wenn die Oberfläche mit der Metallschicht kaschiert oder metallisiert wird. Gerade am Glanz der Oberfläche der Metallschicht läßt sich besonders deutlich zeigen, ob die darunter liegende Folienschicht hinreichend eben und glatt ist.

Die Metallschicht kann aus jedem geeigneten Metall bestehen. Bevorzugt sind Schichten aus Aluminium, Zink, Gold oder Silber oder aus entsprechenden Legierungen, wobei Aluminium oder aluminiumhaltige Legierungen besonders bevorzugt sind. Als geeignete Metallisierungsverfahren seien die Elektroplattierung, das Besputtern und die Vakuumbedampfung genannt, wobei die Vakuumbedampfung bevorzugt ist.

Die Dicke der Metallschicht beträgt etwa 20 bis 600 nm, vorzugsweise 25 bis 100 nm.

Bei der Verwendung von Calciumstearat als Neutralisationsmittel sinkt die durch die Coronabehandlung hervorgerufene Adhäsionswirkung im Laufe der Zeit durch Migration der Umsetzungsstoffe der Neutralisationsreaktion immer mehr ab. Deshalb bleibt die Metallhaftung nicht konstant. Bei Anwendung der erfindungsgemäß zusammengesetzten mehrschichtigen Folie wird überraschenderweise ein wesentlich günstigeres Coronaabfallverhalten registriert, d.h. die Metallhaftung über längere Zeit ist als Folge hiervon wesentlich besser als bei herkömmlichen metallisierten Laminaten.

Metallisierte Folien finden zunehmend für Verpackungszwecke, insbesondere von Lebensmitteln, Verwendung. Insbesondere werden durch eine auf der Kunststoffolie aufgebrachte Metallschicht die Sauerstoffdurchlässigkeit und die Wasserdampfdurchlässigkeit erniedrigt, während die Steifigkeit und die Maschinengängigkeit allgemein erhöht werden und die Lichtdichte einen Höchstwert erreicht. In der Zeitschrift "Neue Verpackung", Heft 9, Seite 1048, 1. und 3. Spalte, aus dem Jahre 1983 wird darauf hingewiesen, daß die guten Sperreigenschaften von metallisierten Kunststoffolien nur dann dauerhaft sind, wenn die aufgebrachte Metallisierung einerseits hervorragend haftet, andererseits aber darauf geachtet wird, daß die Metallschicht nicht beschädigt wird, insbesondere durch Strecken, Biegen, Zerkratzen oder Knittern. Die erfindungsgemäße metallisierbare mehrschichtige Folie eignet sich daher wegen der hervorragenden Hafteigenschaften der in besonders hohem Maße ebenen, hochglänzenden metallisierbaren Deckschicht auch zu diesem Zwecke.

Die Metallschicht auf der erfindungsgemäßen Mehrschichtfolie kann durch Aufkaschieren einer Polyethylenfolie vor mechanischer Beschädigung geschützt werden. Dünne Polyethylenschichten können auch durch eine Extrusionsbeschichtung aufgetragen werden. Die erfindungsgemäße metallisierbare Folie kann in hervorragender Weise zur Herstellung von Verbunden mit anderen Folien (oPP, PET, usw.) bzw. Papier eingesetzt werden.

Die erfindungsgemäße metallisierbare Mehrschichtfolie wird vorzugsweise durch Coextrusion hergestellt. Hierbei werden die Schmelzen der einzelnen Schichten der erfindungsgemäßen mehrschichtigen Folie durch eine Flachdüse coextrudiert, durch Abkühlen verfestigt und anschließend bei einer Temperatur von 120 bis 130°C im Verhältnis von 5 bis 7 : 1 längsgestreckt und bei einer Temperatur von 160 bis 170°C im Verhältnis von 8 bis 10 : 1 quergestreckt. Eine Simultanstreckung ist ebenso möglich. Schließlich wird die biaxial gestreckte Folie thermofixiert und die metallisierbare Deckschicht coronabehandelt. Die Thermofixierung wird bei einer Temperatur von vorzugsweise 150 bis 160°C mit einer zeitlichen Dauer von etwa 0,5 bis 10 s vorgenommen.

Das Einarbeiten der Antiblockmittel, Stabilisatoren, des hydrierten Kohlenwasserstoffharzes und des speziellen Calciumcarbonats geschieht auf bekannte leise mittels Mischer, Extruder, Walze und Kneter; es kann aber auch, insbesondere für das spezielle Calciumcarbonat, ein Masterbatch verwendet werden.

Die Erfindung soll anhand der nachfolgenden Beispiele näher erläutert werden, ohne darauf beschränkt zu sein.

Die in den Beispielen und Vergleichsbeispielen dargelegten mehrschichtigen Folien wiesen eine Gesamtdicke von jeweils 25 μm auf, wobei die Deckschichten eine Dicke von jeweils 0,6 μm zeigten.

Die dreischichtigen Folien wurden alle durch Coextrusion hergestellt. Anschließend wurde eine Zweistufenreckung durchgeführt, bei der um den Faktor 6 längsgestreckt und um den Faktor 9 quergestreckt wurde.

Die metallisierbare Deckschicht wurde coronabehandelt.

Beispiel 1

Die Basisschicht und die metallisierbare Deckschicht bestanden im wesentlichen aus einem isotaktischen Propylenhomopolymeren mit einem Schmelzpunkt von 165°C. Die siegelbare Deckschicht bestand im wesentlichen aus einem Propylen-Ethylen-Copolymeren mit einem Gehalt an Ethylen von 4,5 Gew.-%, bezogen auf das Copolymerisat. Alle Schichten enthielten 0,05 Gew.-%, bezogen auf die jeweilige Schicht, eines gefällten Calciumcarbonats mit einer Teilchengröße von maximal 6 $\mu$m, einem mittleren Teilchendurchmesser von 0,02 $\mu$m, einer spezifischen Oberfläche von 105 m$^2$/g und einem Weißgrad von 96%. Ebenso enthielten alle Schichten 0,1 Gew.-%, bezogen auf die jeweilige Schicht, des Stabilisators [R]Irganox 1010. Die metallisierbare Deckschicht enthielt darüber hinaus noch 6 Gew.-%, bezogen auf diese Deckschicht, eines vollständig hydrierten Cyclopentadienharzes mit einem Erweichungspunkt von 120°C, die siegelbare Deckschicht dagegen 0,2 Gew.-%, bezogen auf diese Deckschicht, des Antiblockmittels [R]Syloid 244.

Beispiel 2

Die Zusammensetzung der Basisschicht entsprach derjenigen aus Beispiel 1. Die metallisierbare Deckschicht unterschied sich von der entsprechenden Deckschicht in Beispiel 1 nur durch das Polymere: Anstelle des isotaktischen Propylenhomopolymeren wurde ein Propylen-Ethylen-Copolymerisat mit einem Gehalt an Ethylen von 2,5 Gew.-%, bezogen auf das Copolymerisat, und einem Schmelzpunkt von 150°C eingesetzt. Die siegelbare Deckschicht bestand anstelle eines Propylen-Ethylen-Copolymeren im wesentlichen aus einem Ethylen-Propylen-Butylen-Terpolymerisat mit einem Gehalt von 1,4 Gew.-% an Ethylen, 92,2 Gew.,-% an Propylen und 6,4 Gew.-% an Butylen, bezogen auf das Terpolymerisat. Anstelle des Antiblockmittels [R]Syloid 244 von Beispiel 1 wurden 0,3 Gew.-% [R]ASP 900, bezogen auf diese Deckschicht, eingesetzt. Gehalt und Art des Calciumcarbonats und des Stabilisators stimmten mit denen des Beispiels 1 überein.

Vergleichsbeispiel 1

Die mehrschichtige Folie dieses Vergleichsbeispiels besaß eine ABA-Struktur. Beide Deckschichten bestanden im wesentlichen aus einem Propylen-Ethylen-Copolymeren mit einem Gehalt an Ethylen von 4,5 Gew.-%, bezogen auf das Copolymere. Beide Schichten enthielten als Antiblockmittel 0,2 Gew.-% [R]Syloid 244 und als Stabilisator 0,1 Gew.-% [R]Irganox 1010, jeweils bezogen auf die Deckschicht. Die Basisschicht war - abgesehen von dem Calciumcarbonat - entsprechend den Beispielen 1 und 2 zusammengesetzt. Anstelle der in den Beispielen eingesetzten 0,05 Gew.-% Calciumcarbonat enthielten alle drei Schichten jeweils 0,05 Gew.-% Calciumstearat als Neutralisationsmittel.

Vergleichsbeispiel 2

Das Beispiel entsprach dem Vergleichsbeispiel 1 mit der Ausnahme, daß in der Basisschicht zusätzlich zu den 0,05 Gew.-% Calciumstearat noch 0,2 Gew.-% Stearinsäureamid, bezogen auf die Basisschicht, enthalten waren.

Die Ergebnisse sind in der folgenden Tabelle zusammengefaßt.

Tabelle

|  | Störende Ablagerungen im Querstreckrahmen | Kratzfestigkeit | Glanz | Metallhaftung |
|---|---|---|---|---|
| Beispiel 1 | keine | + + | 130 | + + |
| Beispiel 2 | keine | + + | 120 | + + |
| Vergleichsbeispiel 1 | ja[x)] | -- | 90 | + - |
| Vergleichsbeispiel 2 | ja[x)] | -- | 90 | -- |

|  |
|---|
| + + = gut |
| + - = mäßig |
| -- = schlecht |

x) Bei allen Vergleichsbeispielen treten störende Ablagerungen von Stearinsäure im Querstreckrahmen auf, die den Rahmen verschmutzen bzw. auf die Folienbahn tropfen und als störender Wachstropfen die Qualität der Folien beeinträchtigen.

Die Bestimmung des Glanzes erfolgte nach DIN 67 530 unter Verwendung eines Reflektometers RB der Firma Dr. Lange (Bundesrepublik Deutschland). Der Glanz wird mit gut bezeichnet, wenn er über 110 liegt.

Unter der Kratzfestigkeit einer Folie versteht man die Beständigkeit der Folienoberfläche gegen Veränderungen infolge mechanischer Beanspruchung, insbesondere bei Reibungsbeanspruchung. Als Maß für die Kratzfestigkeit einer Folie wird in der Regel der Trübungsanstieg $\Delta T$, der durch die Verkratzung verursacht wird, verwendet.

$$\Delta T = T_v - T_o$$

Unter $T_v$ ist hierbei die Trübung der verkratzten Folie und unter $T_o$ die Trübung der nicht veränderten Originalfolie zu verstehen, wobei im Rahmen der Kratzfestigkeitsmessung die Trübung jeweils an einer Folienlage bestimmt wird.

Die Bestimmung der Kratzfestigkeit gegen Reibungsbeanspruchung erfolgte nach DIN 53 754. Die Messungen wurden mit einem Abriebmeßgerät des Typs 1161 der Firma Frank (Bundesrepublik Deutschland) durchgeführt, wobei Reibräder der Marke [(R)]Calibrase CS-10F der Firma Teledyne (USA) eingesetzt wurden, die mit 250 g belastet waren.

Die Kratzfestigkeit wird mit gut bezeichnet, wenn der Trübungsanstieg unter 20% liegt.

Die Metallhaftung wird mit einem Klebebandtest beurteilt. Auf die Metallschicht wird ein Klebeband geklebt, das langsam abgezogen wird. Die Metallhaftung wird als gut bezeichnet, wenn der Metallabzug 0% beträgt. Die Metallhaftung wird mit mäßig bezeichnet, wenn der Abzug weniger als 10% beträgt. Bei einem Metallabzug von mehr als 10% wird die Metallhaftung als schlecht bezeichnet.

**Patentansprüche**

1. Metallisierbare, siegelfähige, biaxial streckorientierte Mehrschichtfolie umfassend eine Basisschicht im wesentlichen aus Polypropylen, eine erste polyolefinische Deckschicht und eine zweite polyolefinische Deckschicht, wobei wenigstens eine polyolefinische Deckschicht siegelfähig ist, und alle Schichten Neutralisationsmittel und einen Stabilisator gegen thermischen Abbau enthalten, dadurch gekennzeichnet, daß alle Schichten als Neutralisationsmittel ein Calciumcarbonat mit einer absoluten Teilchengröße kleiner als 10,0 $\mu$m, einer mittleren Teilchengröße kleiner als 0,1 $\mu$m, einer spezifischen Oberfläche von größer als 40 $m^2$/g und einem Weißgrad größer als 90% und als Stabilisator einen phenolischen Stabilisator mit einer Molmasse größer als 1 000 g/Mol enthalten und daß eine polyolefinische Deckschicht ein Antiblockmittel enthält.

2. Folie nach Anspruch 1, dadurch gekennzeichnet, daß die siegelfähige Deckschicht Antiblockmittel enthält.

3. Folie nach Anspruch 1, dadurch gekennzeichnet, daß eine polyolefinische Deckschicht nicht siegelfähig ist.

6

4. Folie nach Anspruch 3, dadurch gekennzeichnet, daß die nicht siegelfähige Deckschicht coronabehandelt ist.

5. Folie nach Anspruch 3 oder 4, dadurch gekennzeichnet, daß die nicht siegelfähige Deckschicht ein gesättigtes Kohlenwasserstoffharz enthält.

6. Folie nach Anspruch 5, dadurch gekennzeichnet, daß das Kohlenwasserstoffharz ein hydriertes Cyclopentadienharz ist, das in einer Menge von 2 bis 12 Gew.-%, bevorzugt von 6 bis 10 Gew.-%, bezogen auf das Gewicht der Deckschicht, enthalten ist.

7. Folie nach einem der Ansprüche 1 bis 6, dadurch gekennzeichnet, daß alle Schichten Calciumcarbonat in einer Menge von 0,01 bis 0,2 Gew.-%, jeweils bezogen auf das Gewicht der Schicht, enthalten.

8. Folie nach einem der Ansprüche 1 bis 7, dadurch gekennzeichnet, daß die siegelbare Schicht Antiblockmittel in einer Menge von 0,1 bis 0,7 Gew.-%, bevorzugt von 0,2 bis 0,5 Gew.-%, bezogen auf das Gewicht dieser Schicht, enthält.

9. Folie nach Anspruch 8, dadurch gekennzeichnet, daß das Antiblockmittel Siliziumdioxid oder Aluminiumsilikat enthält.

10. Folie nach einem der Ansprüche 1 bis 9, dadurch gekennzeichnet, daß sie eine Gesamtdicke von 10 bis 40 $\mu$m aufweist, wobei die Deckschichten jeweils 0,2 bis 0,7 $\mu$m dick sind.

11. Metallisierte Folie umfassend eine Folie nach einem der Ansprüche 4 bis 10, dadurch gekennzeichnet, daß die nicht siegelfähige, oberflächenbehandelte Deckschicht auf ihrer Außenseite metallisiert ist oder mit einer Metallschicht kaschiert ist.

12. Metallisierte Folie nach Anspruch 11, dadurch gekennzeichnet, daß die Metallisierung durch Vakuumaufdampfung aufgebrachtes Aluminium ist.

13. Metallisierte Folie nach Anspruch 11, dadurch gekennzeichnet, daß die Metallschicht eine Aluminiumfolie ist.

14. Metallisierte Folie nach Anspruch 11, dadurch gekennzeichnet, daß die Metallschicht durch einen lösemittelfreien Zweikomponentenkleber mit der nichtsiegelfähigen, oberflächenbehandelten Schicht verbunden ist.

15. Metallisierte Folie nach einem der Ansprüche 11 oder 12, dadurch gekennzeichnet, daß sie auf der freien Außenseite der Metallisierung einen Schutzüberzug trägt.

16. Metallisierte Folie nach Anspruch 15, dadurch gekennzeichnet, daß der Schutzüberzug ein polyolefinischer Schutzüberzug ist.

17. Metallisierte Folie nach Anspruch 16, dadurch gekennzeichnet, daß der Schutzüberzug eine Polyethylen- oder eine Polypropylenfolie oder eine Polyesterfolie enthält.

18. Metallisierte Folie nach Anspruch 15, dadurch gekennzeichnet, daß sie über ihre siegelbare Deckschicht mit sich dubliert ist oder über diese Deckschicht mit einer ein- oder zweischichtigen Polypropylenfolie verbunden ist.

19. Verfahren zur Herstellung einer Folie nach einem der Ansprüche 1 bis 10, dadurch gekennzeichnet, daß die Schmelzen der einzelnen Schichten durch eine Flachdüse coextrudiert werden, durch Abkühlen verfestigt werden und anschließend bei einer Temperatur von 120 bis 130°C im Verhältnis von 5 bis 7 : 1 längsgestreckt und bei einer Temperatur von 160 bis 170°C im Verhältnis von 8 bis 10 : 1 quergestreckt werden und schließlich thermofixiert werden und daß die metallisierbare Deckschicht coronabehandelt wird.

**20.** Verfahren nach Anspruch 19, dadurch gekennzeichnet, daß die Coronabehandlung mit einem Wechselstrom von 10 000 V und 10 000 Hz durchgeführt wird.

**21.** Verfahren nach Anspruch 19, dadurch gekennzeichnet, daß das Einarbeiten der Antiblockmittel, des Stabilisators, des hydrierten Kohlenwasserstoffharzes und insbesondere des speziellen Calciumcarbonats mittels eines Masterbatches erfolgt.

**22.** Verwendung einer Folie nach einem der Ansprüche 1 bis 10 als Verpackungsfolie, insbesondere in einem Folien- oder Papierverbund.

**Claims**

**1.** A metallizable, sealable, biaxially stretch-oriented multiply film, comprising:
a base layer comprised predominantly of polypropylene, a first polyolefinic facing layer on a first side of said base layer, a second polyolefinic facing layer on a second side of said base layer, wherein at least one polyolefinic facing layer is heat sealable;
each of said layers containing a neutralizing agent, comprising a calcium carbonate having an absolute particle size of less than about 10 $\mu$m, a mean particle size of less than about 0.1 $\mu$m a specific surface area of more than about 40 m$^2$/g and a whiteness of more than about 90 %, and a stabilizer against thermal degradation comprising a phenolic stabilizer having a molecular weight of more than about 1000 g/mol; and
wherein one polyolefinic face layer contains an anti-blocking agent.

**2.** A film as claimed in claim 1, wherein the heat sealable facing layer contains an anti-blocking agent.

**3.** A film as claimed in claim 1, wherein one polyolefinic facing layer is non-heat-sealable.

**4.** A film as claimed in claim 3, wherein the non-heat-sealable facing layer has been corona-treated.

**5.** A film as claimed in claims 3 or 4, wherein the non-heat-sealable facing layer contains a saturated hydrocarbon resin.

**6.** A film as claimed in claim 5, wherein the hydrocarbon resin comprises a hydrogenated cyclopentadiene resin which is present in a quantity from about 2 % to 12 % by weight, preferably from about 6 % to 10 % by weight, relative to the weight of the facing layer.

**7.** A film as claimed in claims 1 to 6, wherein all the layers contain calcium carbonate in a quantity of from about 0.01 % to 0.2 % by weight, relative to the weight of the layer.

**8.** A film as claimed in claims 1 to 7, wherein the sealable layer contains the anti-blocking agent in a quantity from about 0,1 % to 0,7 % by weight, preferably from about 0.2 % to 0.5 % by weight, relative to the weight of this layer.

**9.** A film as claimed in claim 8, wherein the anti-blocking agent contains silica or aluminum silicate.

**10.** A film as claimed in claims 1 to 9, which has an overall thickness from about 10 to 40 $\mu$m, the facing layers each being from about 0.2 to 0.7 $\mu$m thick.

**11.** Metallized film comprising a film as claimed in claims 4 to 10, further comprising a metal layer metallized or laminated to the outside of the non-heat-sealable, surface-treated facing layer.

**12.** Metallized film as claimed in claim 11, wherein the metal layer comprises aluminum applied by vacuum vapour-deposition.

**13.** Metallized film as claimed in claim 11, wherein the metal layer comprises an aluminum foil.

**14.** Metallized film as claimed in claim 11, wherein the metal layer is bonded to the non-heat-sealable, surface treated layer by means of a solvent-free, two-component adhesive.

**15.** Metallized film as claimed in claims 11 or 12, further comprising a protective coating on the outside of the metal layer.

**16.** Metallized film as claimed in claim 15, wherein the protective coating comprises a polyolefinic protective coating.

**17.** Metallized film as claimed in claim 16, wherein the protective coating comprises a polyethylene film or a polypropylene film or a polyester film.

**18.** Metallized film as claimed in claim 15, which is doubled on itself via its sealable facing layer or is bonded via this facing layer to a single-ply or two-ply polypropylene film.

**19.** A process for producing a film as claimed in claims 1 to 10, which comprises the steps of co-extruding melts of the individual layers through a flat film die, solidifying the coextruded film by cooling, longitudinally stretching at a temperature from about 120° to 130 ° C in a ratio from about 5 to 7:1, transversely stretching at a temperature from about 160° to 170° C in a ratio of from about 8 to 10:1, and corona-treating the metallizable facing layer.

**20.** The process as claimed in claim 19, wherein the corona treatment is carried out using an alternating current of about 10 000 V and 10 000 Hz.

**21.** The process as claimed in claim 19, comprising the step of incorporating the anti-blocking agents, the stabilizer, the hydrogenated hydrocarbon resin and particularly the calcium carbonate by means of a masterbatch.

**22.** Use of the film as claimed in claims 1 to 10 as packaging film, especially in a film composite or paper composite.

**Revendications**

**1.** Feuille à plusieurs couches, métallisable, scellable, à orientation d'étirage biaxiale, comprenant une couche de base essentiellement en polypropylène, une première couche extérieure polyoléfinique et une deuxième couche extérieure polyoléfinique, au moins une couche extérieure polyoléfinique étant scellable et toutes les couches contenant un agent de neutralisation et un stabilisateur contre la dégradation thermique, caractérisée en ce que toutes les couches contiennent, en tant qu'agent de neutralisation, un carbonate de calcium avec une grandeur absolue de particule inférieure à 10,0 $\mu$m, une grandeur moyenne de particule inférieure à 0,1 $\mu$m, une surface spécifique de plus de 40 m$^2$/g, et un degré de blanc supérieur à 90% et, en tant que stabilisateur, un stabilisateur phénolique avec une masse molaire supérieure à 1000 g/mol, et qu'une couche extérieure polyoléfinique contient un agent antiadhérent.

**2.** Feuille selon la revendication 1, caractérisée en ce que la couche de couverture scellable contient un agent antiadhérent.

**3.** Feuille selon la revendication 1, caractérisée en ce qu'une couche extérieure polyoléfinique n'est pas scellable.

**4.** Feuille selon la revendication 3, caractérisée en ce que la couche extérieure non scellable est traitée par effet de couronne.

**5.** Feuille selon la revendication 3 ou 4, caractérisée en ce que la couche extérieure non scellable contient une résine d'hydrocarbure saturée.

**6.** Feuille selon la revendication 5, caractérisée en ce que la résine d'hydrocarbure est une résine de cyclopentadiène hydrogénée, contenue en une quantité de 2 à 12 % en poids, de préférence de 6 à 10 % en poids, par rapport au poids de la couche extérieure.

7.  Feuille selon l'une des revendication 1 à 6, caractérisée en ce que toutes les couches contiennent du carbonate de calcium en une quantité de 0,01 à 0,2 % en poids par rapport au poids de la couche respective.

8.  Feuille selon l'une des revendications 1 à 7, caractérisée en ce que la couche scellable contient un agent antiadhérent en une quantité de 0,1 à 0,7 % en poids, de préférence 0,2 à 0,5 % en poids, par rapport au poids de cette couche.

9.  Feuille selon la revendication 8, caractérisée en ce que l'agent antiadhérent contient du dioxyde de silicium ou du silicate d'aluminium.

10. Feuille selon l'une des revendications 1 à 9, caractérisée en ce qu'elle présente une épaisseur totale de 10 à 40 $\mu$m, les couches extérieures ayant respectivement une épaisseur de 0,2 à 0,7 $\mu$m.

11. Feuille métallisée comprenant une feuille selon l'une des revendications 4 à 10, caractérisée en ce que la couche extérieure non scellable, à surface traitée, est métallisée sur sa face extérieure ou doublée d'une couche de métal.

12. Feuille métallisée selon la revendication 11, caractérisée en ce que la métallisation est de l'aluminium appliqué par vaporisation sous vide.

13. Feuille métallisée selon la revendication 11, caractérisée en ce que la couche de métal est une feuille d'aluminium.

14. Feuille métallisée selon la revendication 11, caractérisée en ce que la couche de métal est liée par une colle à deux composants exempte de solvant à la couche non scellable à surface traitée.

15. Feuille métallisée selon l'une des revendications 1 ou 2, caractérisée en ce qu'elle porte sur la face extérieure libre de la métallisation un revêtement protecteur.

16. Feuille métallisée selon la revendication 15, caractérisée en ce que le revêtement protecteur est un revêtement protecteur polyoléfinique.

17. Feuille métallisée selon la revendication 16, caractérisée en ce que le revêtement protecteur contient une feuille de polyéthylène ou une feuille de polypropylène ou une feuille de polyester.

18. Feuille métallisée selon la revendication 15, caractérisée en ce qu'elle est doublée par elle-même par l'intermédiaire de sa couche extérieure scellable ou qu'elle est liée par l'intermédiaire de cette couche extérieure à une feuille de polypropylène d'une ou deux couches.

19. Procédé pour la fabrication d'une feuille selon l'une des revendications 1 à 10, caractérisé en ce que les fusions des couches individuelles sont coextrudées par une filière plate, solidifiées par refroidissement et ensuite étirées en sens longitudinal dans un rapport de 5 à 7 : 1 à une température de 120 °C à 130 °C et étirées en sens transversal dans un rapport de 8 à 10 : 1 à une température de 160 °C à 170 °C et enfin thermofixées, et que la couche extérieure métallisée est traitée par effet de couronne.

20. Procédé selon la revendication 19, caractérisé en ce que le traitement par effet de couronne est réalisé avec un courant alternatif de 10 000 V et 10 000 Hz.

21. Procédé selon la revendication 19, caractérisé en ce que l'incorporation de l'agent antiadhérent, du stabilisateur, de la résine d'hydrocarbure hydrogénée et notamment du carbonate de calcium spécial est réalisée au moyen d'un mélange maître.

22. Utilisation d'une feuille selon l'une des revendications 1 à 10 en tant que feuille d'emballage, notamment dans un composite de feuilles ou papiers.